# EUROPEAN PATENT SPECIFICATION

(11) **EP 4 689 459 B1**
(45) Date of publication and mention of the grant of the patent: **02.12.2026**
(21) Application number: 24720287.2
(22) Date of filing: 21.03.2024
(51) Int. Cl.: F16K 15/14, F16K 17/04

(54) **VALVE FOR MAINTAINING THE RESIDUAL PRESSURE IN AN AIR SUSPENSION OF A VEHICLE**
VENTIL ZUR AUFRECHTERHALTUNG DES RESTDRUCKES IN EINER LUFTFEDERUNG EINES FAHRZEUGS
SOUPAPE SERVANT À MAINTENIR LA PRESSION RÉSIDUELLE DANS UNE SUSPENSION PNEUMATIQUE D'UN VÉHICULE

(30) Priority: 29.03.2023 IT 202300006021
(43) Date of publication of application: 11.02.2026
(73) Proprietor: Wonder SPA, 26100 Cremona (IT)
(72) Inventor: FERRARI, Alessandro, 26100 Cremona (IT); GALLI, Giancarlo, 26100 Cremona (IT); CAZZANTI, Stefano, 26100 Cremona (IT)
(74) Representative: Gualeni, Nadia
(86) International application number: PCT/IB2024/052719
(87) International publication number: WO 2024/201222

(56) References cited:
- US-A- 2 639 194
- US-B1- 6 173 738

## Description

The present invention pertains to the field of valves for automotive air suspensions, in particular, to valves for maintaining the residual pressure in an air suspension of a vehicle.

A valve for maintaining the residual pressure, also called Rest Druck Hält Ventil (RDHV), is a valve with two inlets that allow the bidirectional passage of flow when the pressure at one of the two ends of the valve exceeds a limit value. Such valve, applied to an automotive air suspension, must ensure not only traditional inflation and regulation in the delivery direction, but also the closure of said valve in case of no pressure on the delivery side (e.g., in case of line rupture) and pressure discharge in case of overpressure during use. Examples of known valves for maintaining residual pressure are shown in US 6 173 738 B1 and US 2 639 194 A.

The known solutions of valves for maintaining residual pressure have some drawbacks mainly related to flow rate, which is not always optimal, and pressure drops. Furthermore, problems related to excessive noise during valve flushing have been found in the known solutions.

In the field of vehicle suspension valves, the need is therefore felt for a valve for maintaining residual pressure that has an optimal flow rate at different fluid inlet pressures.

The object of the present invention is to provide a valve for maintaining residual pressure in an air suspension of a vehicle that overcomes the drawbacks of the known valves and meets the requirements of the sector mentioned above.

Such object is achieved by a valve according to claim 1. Other embodiments of the valve according to the invention are described in the dependent claims.

Further features and advantages of the present invention will become more apparent from the following detailed description, in which:
- Fig. 1 shows a sectional view of a valve according to the present invention, in a closed configuration, in an embodiment example (superposition of first body over second body, intermediate body housed in the first body);
- Fig. 2 shows the valve in Fig. 1 in an open configuration;
- Fig. 3A, 3B and 3C show some axonometric views of an internal component of the valve in Fig. 1, and in particular of an intermediate body;
- Fig. 4 is a top view of the intermediate body in Fig. 3A;
- Fig. 5 is a sectional view along the section line E-E in Fig. 6;
- Fig. 6 is a sectional view along the section line C-C in Fig. 4;
- Fig. 7 is a sectional view along the section line D-D in Fig. 4;
- Fig. 8 shows the valve from Fig. 1 where, for the sake of clarity of presentation, the intermediate body and the membrane have been obscured;
- Fig. 9A is a sectional view of a valve according to the present invention, in a closed configuration, in a further embodiment example (crimping or re-flanging and two sealing rings);
- Fig. 9B is a sectional view of a valve according to the present invention, in a closed configuration, in a further embodiment example (crimping or re-flanging and a double-sealing ring);
- Fig. 10 is a sectional view of a valve according to the present invention, in a closed configuration, in a further embodiment example (superposition of second body over first body) ;
- Fig. 11 is a sectional view of a valve according to the present invention, in a closed configuration, in a further embodiment example (superposition of second body over first body, intermediate body housed in the second body);
- Fig. 12A, 12B and 12C are some axonometric views of an internal component of the valve in Fig. 1, and in particular of an intermediate body in a further embodiment variant;
- Fig. 13 is a sectional view along the section line of the intermediate body in Fig. 12A;
- Fig. 14 and 15 show two embodiment variants of the second body, and in particular of the coupling zone;
- Fig. 16 is a sectional view of a valve according to the present invention, in an open configuration, in an embodiment example with a variable-thickness membrane;
- Fig. 17 shows the valve in Fig. 16 in a closed configuration;
- Fig. 18 is a sectional view of a valve according to the present invention, in an open configuration, in an embodiment example with an intermediate body upstream of the membrane;
- Fig. 19 shows the valve in Fig. 1 in a closed configuration;
- Fig. 20 is a sectional view of a valve according to the present invention, in an open configuration, in an embodiment example with a membrane provided with a central channel;
- Fig. 21 is a sectional view of a valve according to the present invention, in an open configuration, in an embodiment example with an intermediate body upstream of a membrane provided with a central channel;
- Fig. 22 is a sectional view of a valve according to the present invention, in an open configuration, in an embodiment example with an intermediate body provided with convergent and divergent radial channels, regardless of fluid direction.

With reference to the above figures, reference number 100 has been used to generically refer to a valve for maintaining residual pressure in an air suspension of a vehicle according to the present invention.

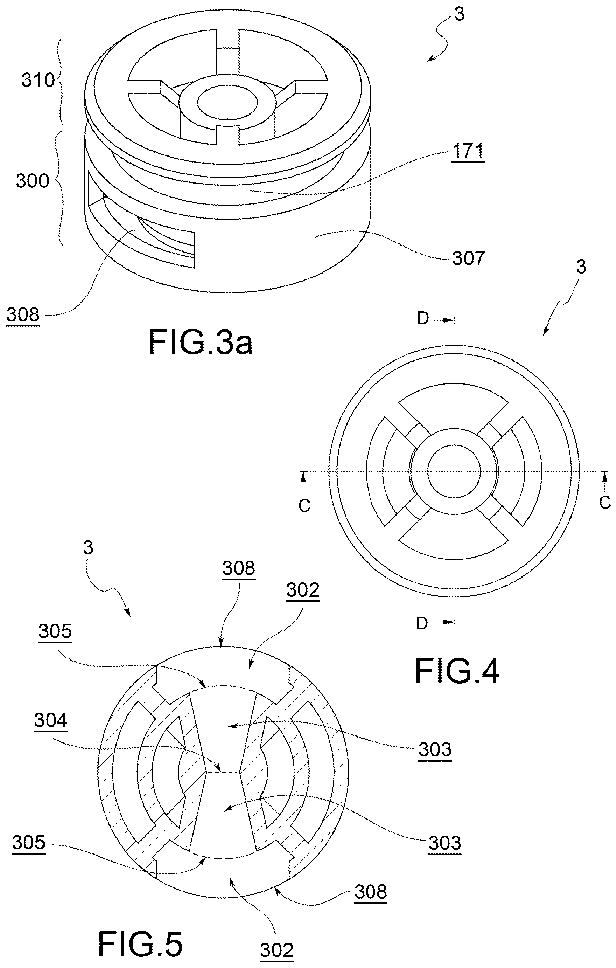

As is clearly seen in all the figures listed above, and as is clearly detailed hereinafter, the valve 100 comprises a first body 1 and a distinct second body 2, in which between the first body 1 and the second body 2 there is arranged an intermediate body 3, distinct from the first and second bodies. See for example Fig. 3a to 7 and 12a to 13. The first, second and intermediate bodies are separate and distinct elements assembled to form the valve 100. In fact, one of the advantages of the present invention is that the intermediate body 3, which concentrates in itself all the functionality required of the valve 100, may be made by injection molding, a technology that allows a wide margin of freedom and precision on the geometry and on the materials that may be used.

Thus, the valve 100 comprises a first body 1, provided with an inlet opening 111 of an inlet duct 11 for a fluid, e.g., pressurized air from the circuit of the vehicle, sealingly connected with a second body 2, provided with an outlet duct 21 for the fluid terminating in an outlet opening 211, e.g., towards the suspension.

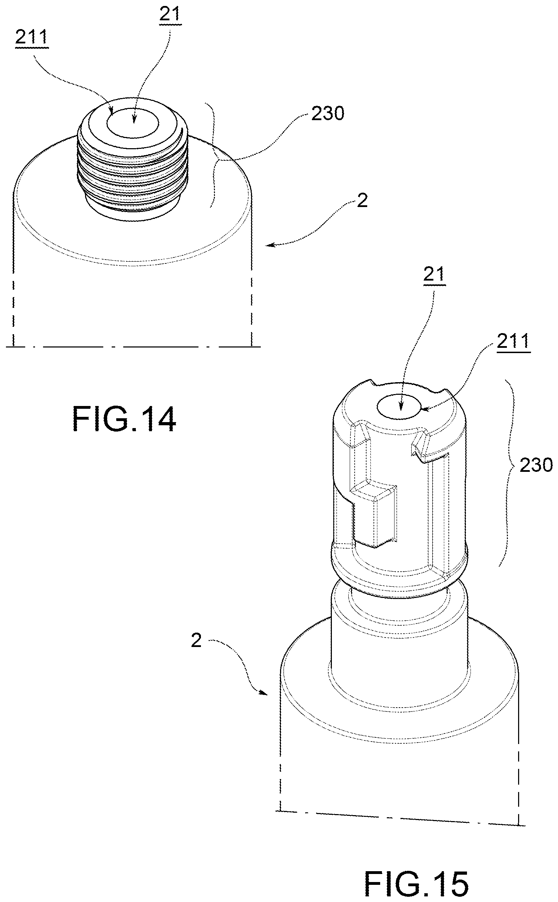

As is shown in Fig. 14 and 15, the second body 2 is provided with a connection end 230, terminating in the outlet opening 211.

In the example in Fig. 14, the second body 2 is provided with a threaded connection end 230 to allow a screwing connection, for example, with the suspension.

In the example in Fig. 15, the second body 2 is provided with a connection end 230 in the form of a bayonet coupling to allow a push-and-twist connection, for example, with the suspension.

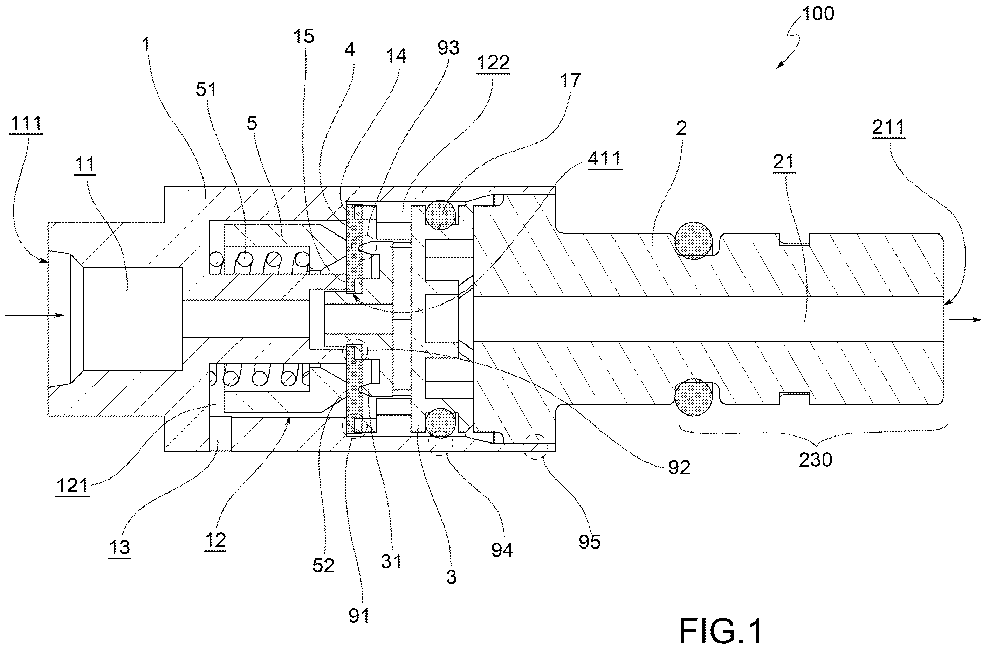

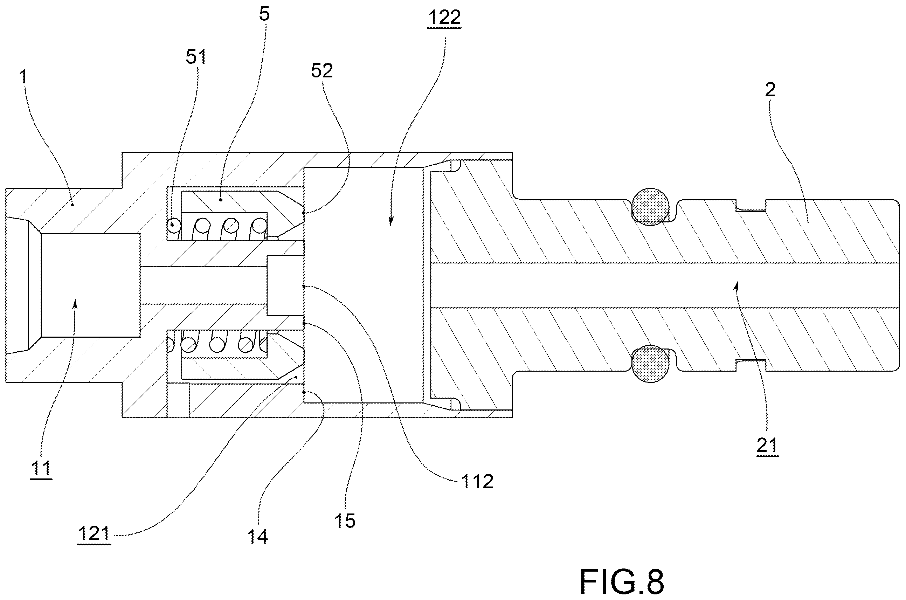

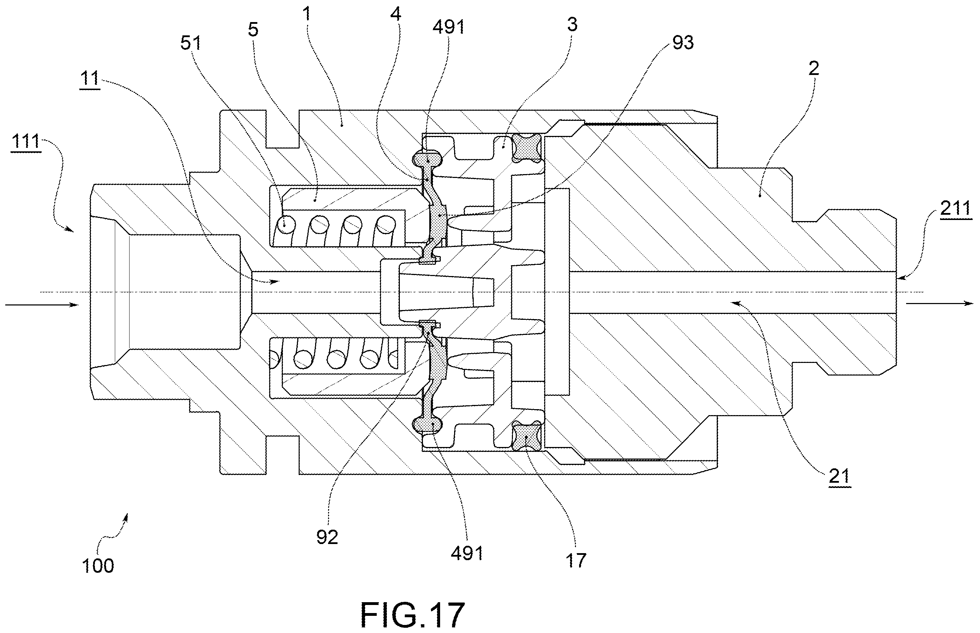

In the embodiment examples in Fig. 1, 2, 8, 16, 17, 20 and 22, the second body 2 is inserted at least partially into the first body 1, and they are joined together, for example, by welding, fusion, interference, or bonding.

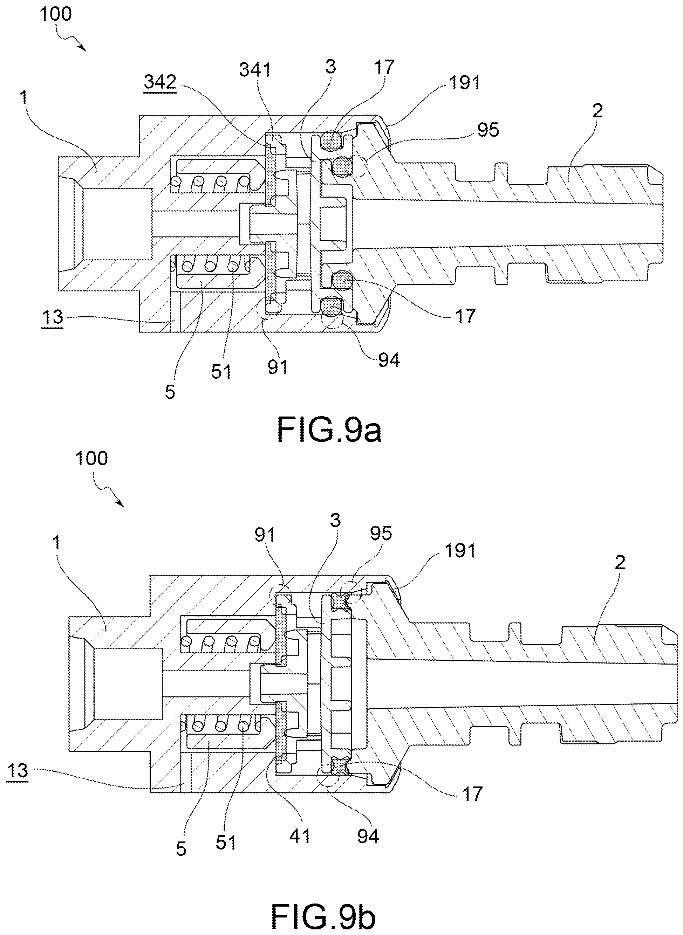

In the embodiment examples in Fig. 9A and 9B, the second body 2 is inserted at least partially into the first body 1, and they are joined together, for example, by crimping or re-flanging, i.e., the bending and mechanical crushing (plastic deformation) of a portion of the end 191 of the first body 1 onto the second body 2.

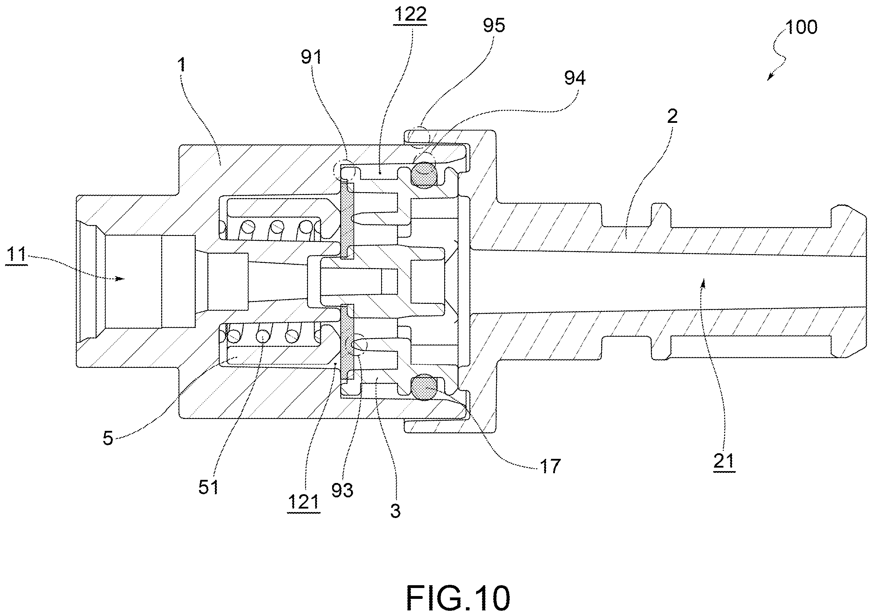

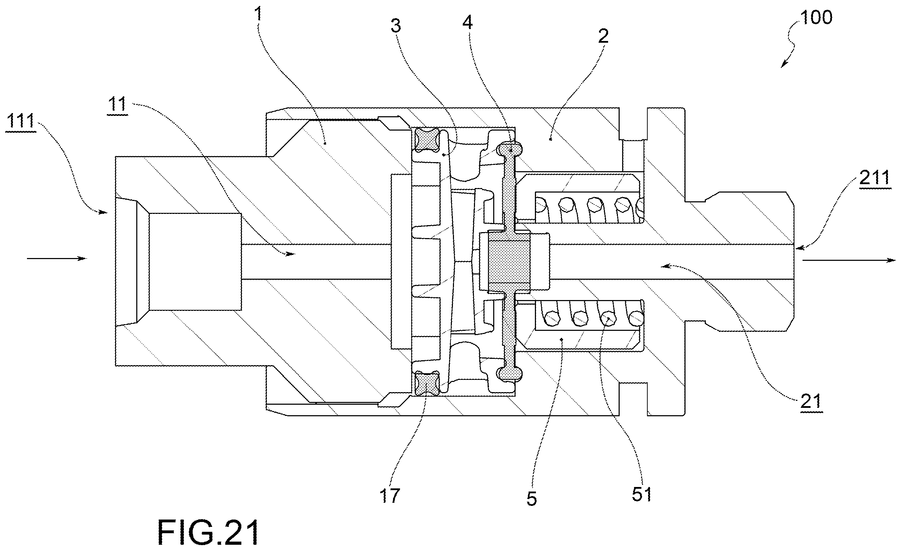

In the embodiment examples in Fig. 10, 11, 18, 19 and 21, the first body 1 is inserted at least partially into the second body 2, and they are joined together, for example, by welding, fusion, interference, or bonding.

The first body 1 and the second body 2 are joined together in a seal, obtained as a material seal (e.g. by welding) or with at least one gasket 17.

Between the first body 1 and the second body 2 an internal seat is defined in which other components of the valve 100 are housed. The inner housing comprises a piston housing 121 and an intermediate housing 122.

In the embodiment example in Fig. 1, 2, 8, 9A, 9B, 10, 16, 17, 20 and 22, both the piston housing 121 and the intermediate housing 122 are made within the first body 1.

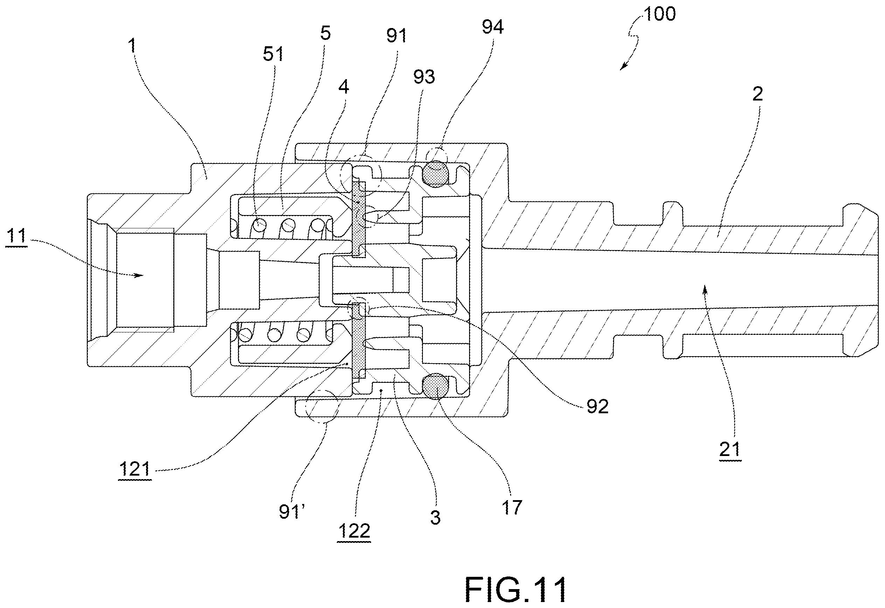

In the embodiment example in Fig. 11, the piston housing 121 is made inside the first body 1 and the intermediate housing 122 is made inside the second body 2.

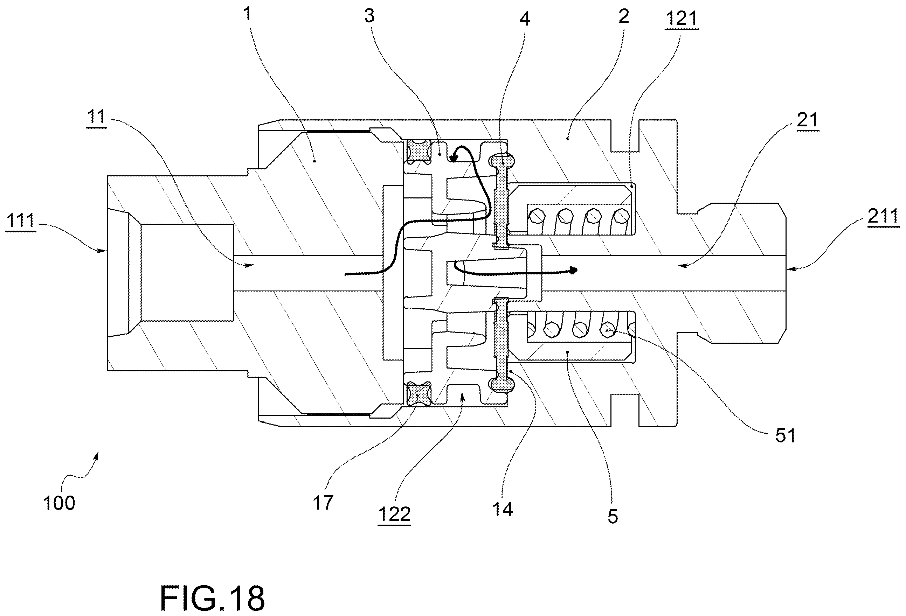

In the embodiment example in Fig. 18, 19 and 21, both the piston housing 121 and the intermediate housing 122 are made inside the second body 2.

In the embodiment variants of Fig. 1, 2, 8, 9A, 9B, 10, 11, 16, 17, 20 and 22, the piston housing 121 is arranged upstream relative to the intermediate housing 122. In other words, the piston 5 and the thrust spring 51 are arranged upstream of the membrane 4. In such examples, the intermediate body 30 is arranged downstream of the membrane 4.

In the embodiment variants of Fig. 18, 19 and 21, the piston housing 121 is arranged downstream of the intermediate housing 122. In other words, the piston 5 and the thrust spring 51 are arranged downstream of the membrane 4. In such examples, the intermediate body 30 is arranged upstream of the membrane 4. Advantageously, it should be noted that in such configurations the noise encountered during valve flushing is greatly reduced.

Referring to the example in Fig. 1, the first body 1 comprises a piston housing 121, arranged about the inlet duct 11, followed downstream by an intermediate housing 122, preferably at the terminal end 112 of the inlet duct 11.

Referring to the example in Fig. 11, the first body 1 comprises a piston housing 121 arranged about the inlet duct 11, followed downstream by an intermediate housing 122 made in the second body 2, preferably at the terminal end 112 of the inlet duct 11.

Referring to the example in Fig. 18, the second body 2 comprises a piston housing 121, arranged about the outlet duct 21, preceded upstream by an intermediate housing 122, preferably at the initial end of the outlet duct 21.

In the piston housing 121 a piston 5 provided with a thrust spring 51 is housed.

An intermediate body 3, provided with a sealing collar 31 for a flexible membrane 4, is housed in the intermediate housing 122, thus downstream of the piston 5 in the example in Fig. 1 and upstream of the piston 5 in the example in Fig. 18. The intermediate body 3 is completely enclosed between the first body 1 and the second body 2. Such a solution allows to concentrate all the functions required of the valve 100 onto the intermediate body 3.

The membrane 4 blocks the passage of fluid between the inlet duct 11 and the outlet duct 21. The membrane 4 is housed between the piston 5 and the intermediate body 3. As seen in Fig. 1, the membrane 4 is pushed into the closed position by the piston 5, against the sealing collar 31 of the intermediate body 3. The membrane 4 is thus pinched between the sealing collar 31 and the annular end 52 of the piston 5, in a movable sealing zone 93.

Preferably, the membrane 4 is a flexible disc.

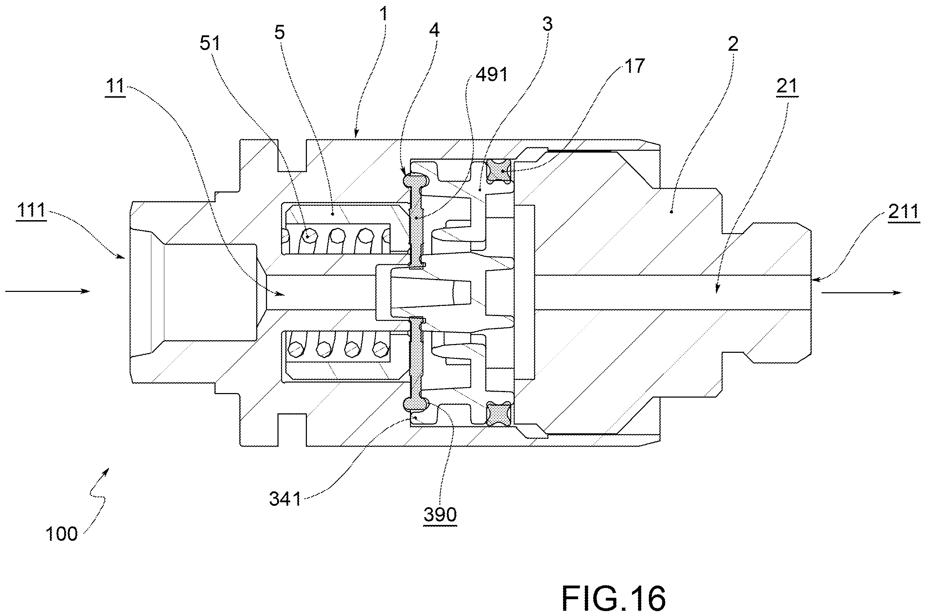

To solve any problems of the membrane 4 dislodging at high usage pressures, said membrane has thickness changes along the disc section, as seen in the embodiment examples in Fig. 16 to 21.

Preferably, the central portion of the membrane 4, between the sealing collar 31 of the intermediate body 3 and the annular end 52 of the piston 5 (hereinafter called the movable sealing zone 93) has a greater thickness than the rest of the section of the disc.

Preferably, the membrane 4, at an outer edge 41, is provided with a lip 491 protruding from the surface of the disc. The outer edge 41 is protruding on at least one face of the disc, preferably on both faces of the disc.

Advantageously, instead of simply making a thicker membrane 4 in each part of the disc, it was preferred to make specific thicker zones (movable sealing zone 93 and lip 491) while maintaining thinner zones (peripheral gripping zone 91 and central gripping zone 92) that give more flexibility to the membrane 4.

Preferably, the membrane 4 is provided with a central hole 411 in which an annular protrusion 42 of the intermediate body 3, as in Fig. 1, or an annular protrusion of the first body 1, for example near the terminal end of the inlet duct 11, is inserted, in such a way that said membrane is fixed in place by friction.

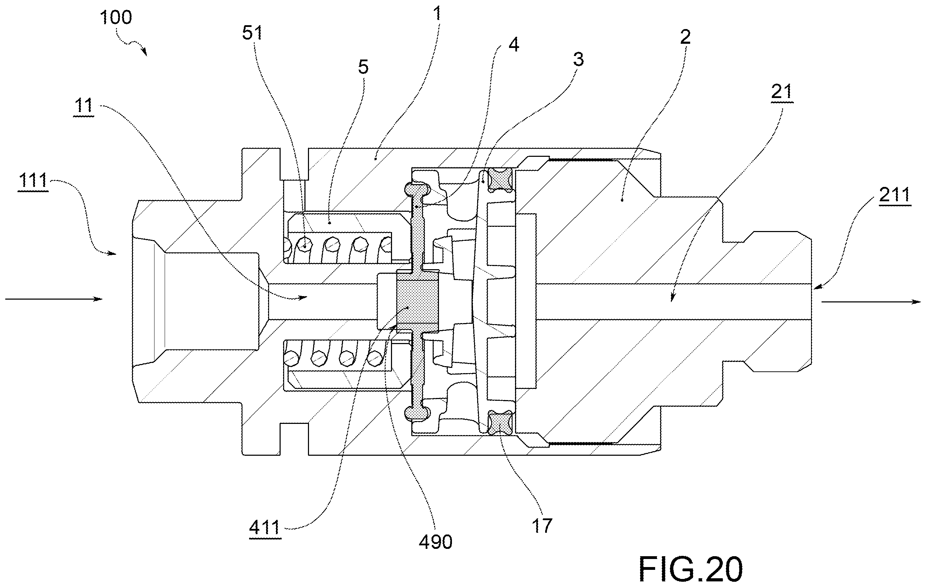

In the example in Fig. 20, the membrane 4 is centrally provided with a cylindrical portion, called the membrane cylinder 490, which defines the central hole 411. The membrane cylinder 490 allows the membrane to be held in place by friction between the intermediate body 3 and the first body 1. Furthermore, such solution allows for greater flow passage.

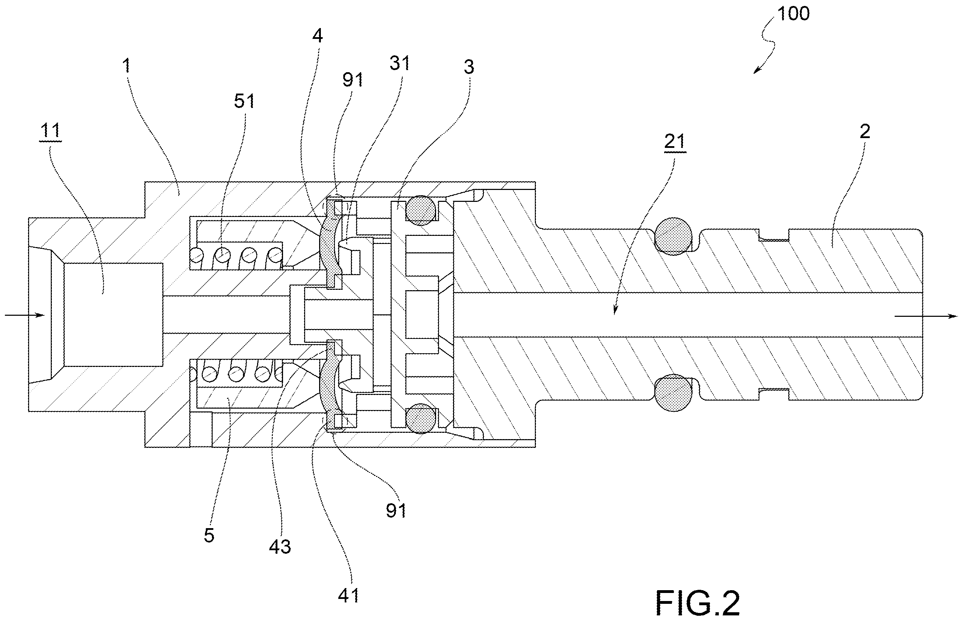

The pressure of the incoming fluid acts on a side of the membrane 4, which is configured as a sealing disc. When the force exerted by the inlet fluid pressure is less than the force of the thrust spring 51, the membrane 4 closes the flow passage to the outlet duct 21. As soon as the force of the fluid at the inlet overcomes the counterforce exerted on the membrane 4 by the thrust spring 51, the membrane 4 moves and/or deforms, as seen in Fig. 2, by rising from the sealing collar 31. In this way, a passage for the flow is opened towards the outlet duct 21.

The movement and/or deformation of the membrane 4 is facilitated by a compensation opening 13, visible in Fig. 1. The compensation opening is made through the outer wall of the first body 1, which connects the piston housing 121 with the external environment and ensures that there is always ambient pressure in the spring and piston zone.

The membrane 4 is held in place between the first body 1 and the intermediate body 3 in at least two gripping zones. In the example in Fig. 18, the membrane 4 is held in place between the intermediate body 3 and the second body 2. The same considerations provided below referring to the first body 1 are equally applicable to the second body 2.

A peripheral gripping zone 91 is made between a peripheral shoulder 14 of the first body 1 and a peripheral portion 34 of the intermediate body 3. The peripheral shoulder 14 is preferably placed between the piston housing 121 and the intermediate housing 122.

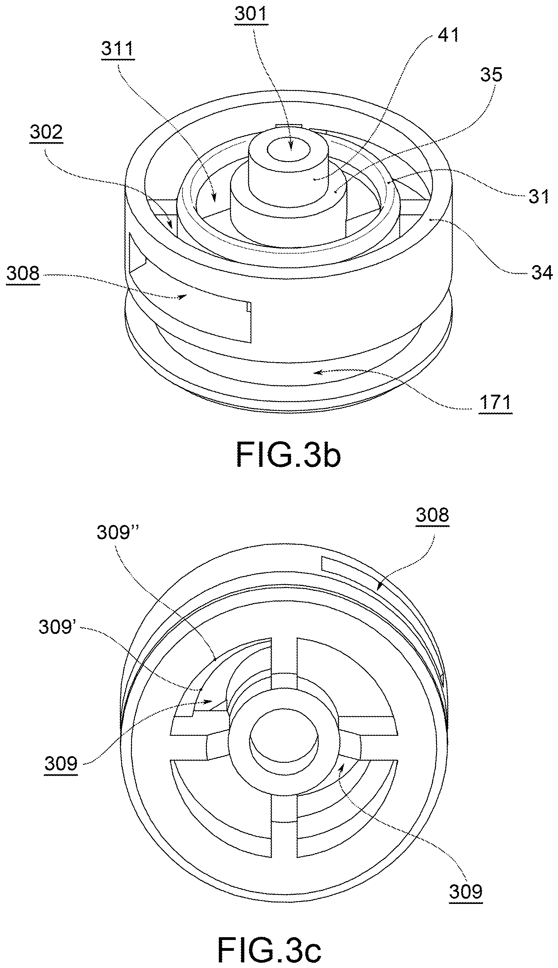

In the embodiment examples in Fig. 1, 2, and 8, the peripheral portion 34 of the intermediate body 3 is substantially flat, as seen in Fig. 3B, and an outer edge 41 of the membrane 4 remains pinched between the peripheral shoulder 14 of the first body 1 and the entire peripheral portion 34. In such example, the holding force of the membrane 4 depends on the thrust exerted by the intermediate body 3 against the first body 1.

In the embodiment examples in Fig. 9A, 9B, 10, and 11, the peripheral portion 34 of the intermediate body 3 comprises an outermost annular protrusion 341 which defines an annular seat 342 in which an outer edge 41 of the membrane 4 is accommodated, which remains pinched between the peripheral shoulder 14 of the first body 1 and the bottom of the annular seat 342. In such example, the holding force of the membrane 4 depends on the depth of the annular seat 342, and no longer on the thrust exerted by the intermediate body 3 against the first body 1. Such solution enables more precise control of the holding force, i.e. the crushing, of the membrane 4.

In the embodiment examples in Fig. 16 to 21, the peripheral portion 34 of the intermediate body 3 also comprises a groove 390 in which an outer edge 41 of the membrane 4 appropriately equipped with a lip 491 is housed, which remains pinched between the peripheral shoulder 14 of the first body 1 and the bottom of the annular seat 342. Such solution allows for the retention of the membrane 4 to be improved and reduces the risks of its dislodging or displacement.

A central gripping zone 92 is made between a central shoulder 15 of the first body 1 and a central portion 35 of the intermediate body 3. The central shoulder 15 is preferably placed at the terminal edge of the inlet duct 11.

In the embodiment examples shown in the figures, the central portion 35 of the intermediate body 3 is essentially flat, as seen in Fig. 3B, and an inner edge 43 of the membrane 4 remains pinched between the central shoulder 15 of the first body 1 and the entire central portion 35. In such example, the holding force of the membrane 4 depends on the thrust exerted by the intermediate body 3 against the first body 1.

In an alternative embodiment example, not shown in the figures, the central portion 35 of the intermediate body 3 comprises an annular, innermost protrusion that defines an annular seat in which an inner edge 43 of the membrane 4 is accommodated, which remains pinched between the central shoulder 15 of the first body 1 and the bottom of the annular seat. In such example, the holding force of the membrane 4 depends on the depth of the annular seat, and no longer on the thrust exerted by the intermediate body 3 against the first body 1. Such solution enables more precise control of the holding force, i.e. the crushing, of the membrane 4.

The peripheral gripping zone 91 and central gripping zone 92 are fixed inlet sealing zones, which ensure the sealing of the inlet duct 11 with respect to the external environment, since the piston housing 121 is in communication with the external environment through the compensation opening 13.

A fixed intermediate sealing zone 94 is also provided, which ensures the sealing of the inlet duct 11 with respect to the outlet duct 21. The fixed intermediate sealing zone 94 is obtained by a gasket 17, housed in a gasket seat 171 provided in the intermediate housing 3, pushed in abutment against the inner wall of the intermediate housing 122 of the first body 1.

A fixed outlet sealing zone 95 is also provided to ensure the sealing of the outlet duct 21 with respect to the external environment.

In the embodiment examples in Fig. 1, 2, 8, 10, 16, 17, 20 and 22, the fixed outlet sealing zone 95 is obtained by the sealed engagement between the first and second bodies, such as by welding, fusion, or bonding.

In the embodiment examples in Fig. 9A and 9B, the fixed outlet sealing zone 95 is obtained by means of a gasket 17, housed in a gasket seat provided in the intermediate body 3 (Fig. 9B) or in the second body 2 (Fig. 9A), pushed in abutment between the intermediate body 3 and the second body 2.

In the example in Fig. 9b, the fixed intermediate sealing zone 94, which ensures the sealing of the inlet duct 11 with respect to the outlet duct 21, and the fixed outlet sealing zone 95, which ensures the sealing of the outlet duct 21 with respect to the external environment, is obtained by means of a gasket 17, housed in a gasket seat 171 provided in the intermediate body 3, pushed in abutment against the inner wall of the intermediate housing 122 of the first body 1.

In the example in Fig. 11, 18, 19 and 21, a fixed inlet sealing zone (denoted as 91') is provided, which ensures the sealing of the inlet duct 11 with respect to the external environment, obtained by the sealed engagement between the first and second bodies, such as by welding or bonding. As an alternative to the sealed engagement between the first and second bodies, a gasket 17 arranged between the first and second bodies may be used.

Thus in summary, the valve 100 comprises sealing means between the first body 1 and the second body 2, sealing means between the first body 1 and the intermediate body 3, and sealing means between the intermediate body 3 and the second body 2.

The gasket 17 is for example an O-ring, or an X-ring (as in Fig. 9B).

The following discussion refers to solutions in which the intermediate body 3 is housed in the first body 1 upstream of the membrane 4, but is equally applicable, with reverse flow, to the solution in which the intermediate body 3 is housed in the second body 2 downstream of the membrane 4.

As mentioned above, the intermediate body 3 is arranged within the first body 1 and is provided with a sealing collar 31 on which rests the membrane 4, which remains pinched, in a central portion thereof, between the sealing collar 31 and the annular end 52 of the piston 5 in a movable sealing zone 93. Such movable sealing zone 93 ensures the sealing of the inlet duct 11 with respect to the outlet duct 21 when the force exerted by the fluid pressure in either of these ducts is less than the force of the thrust spring 51. As soon as the force of the pressure in one of such ducts overcomes the counterforce exerted by the spring, the membrane 4 rises from the sealing collar 31 and opens the passage of flow towards the outlet duct 21.

Fig. 3A, 3B, 3C, 4-7, 12A, 12B, 12C and 13 show the special geometry of the intermediate body 3 in various embodiments.

The intermediate body 3 comprises a loading portion 300 followed by an unloading portion 310. The loading portion 300 is fluidically separated from the unloading portion 310 by means of the membrane 4.

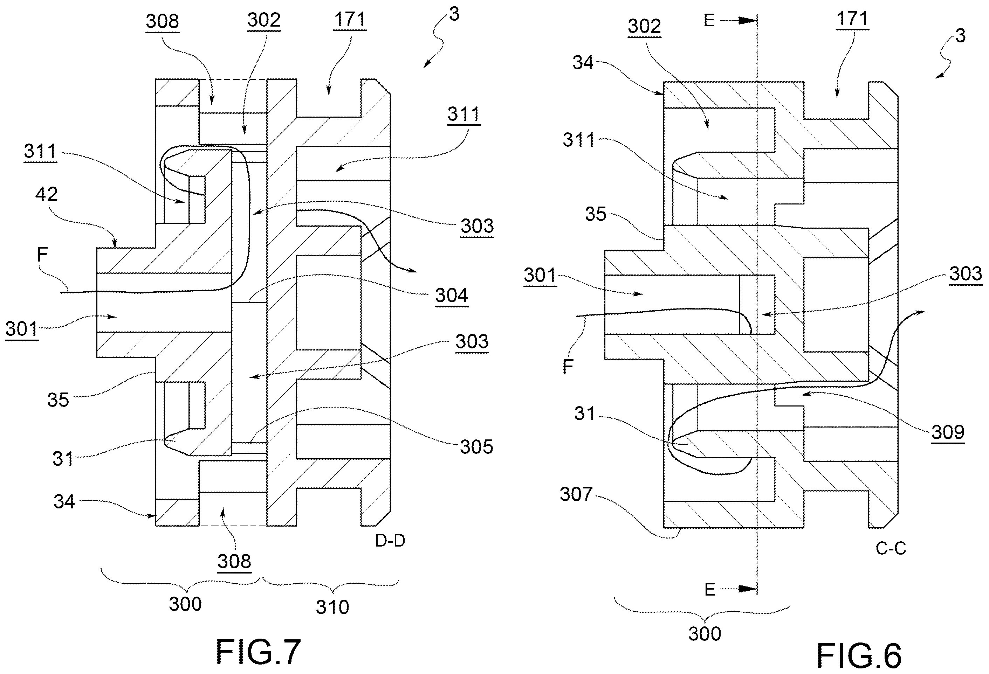

The loading portion 300 comprises the sealing collar 31, the peripheral portion 34, the central portion 35, and the annular protrusion 42, as seen in Fig. 7.

The loading portion 300 has, as seen in Fig. 6 and 7, a central channel 301 fluidically connected upstream to the inlet duct 11 and downstream, by means of at least one radial channel 303, to an outer circular crown 302.

The central channel 301 defines, at the opposite end from that connected to the radial channels 303, the annular protrusion 42 on which the membrane 4 may be fitted.

The unloading portion 310 is provided with an inner circular crown 311 connected downstream, by means of at least one axial channel 309, to the outlet duct 21, visible in Fig. 3C and 6.

In the example of Fig. 1, the incoming fluid F, originating from the inlet duct 11, enters inside the central channel 301 of the intermediate body 3 and is carried into the outer circular crown 302 by means of at least one radial channel 303. The advancement of the fluid is then interrupted by the membrane 4 in correspondence with the movable sealing zone 93. When the pressure force of the incoming fluid acting on the membrane 4 is sufficient to overcome the preload force of the spring 51, the movable sealing zone 93 gives way and a passage opens, allowing the fluid to advance into the inner circular crown 311 of the unloading portion 310 and then continue into the outlet duct 21 of the second body 2. The fluid F may also circulate in the opposite direction because both the fluid coming from the inlet duct 11 and the fluid coming from the outlet duct 21 have equal pressures, and both are opposed to the thrust direction of the spring 51.

In the example in Fig. 18, Fig. 6 and 7 should be read with reverse fluid F direction. The incoming fluid F originating from the inlet duct 11 enters the inner circular crown 311. The advancement of the fluid is interrupted by the membrane 4 at the movable seal zone 93. When the pressure force of the incoming fluid acting on the membrane 4 is sufficient to overcome the preload force of the spring 51, the movable seal zone 93 gives way, and a passage is opened that allows the fluid to advance into the outer circular crown 302. Through at least one radial channel 303 the fluid reaches the central channel 301 and from there continues into the outlet duct 21.

Advantageously, a number of technical solutions have been adopted to reduce the pressure drops mainly concentrated within the intermediate body 3, where the fluid F undergoes a number of significant direction deviations:
- it enters the intermediate body 3 with an axial direction and according to a first way (downstream);
- it changes direction from axial to radial outwards;
- it changes direction from radial to axial with a way opposite to the first way (upstream);
- it changes direction from axial to radial inwards;
- it changes direction from radial to axial according to the first way (downstream).

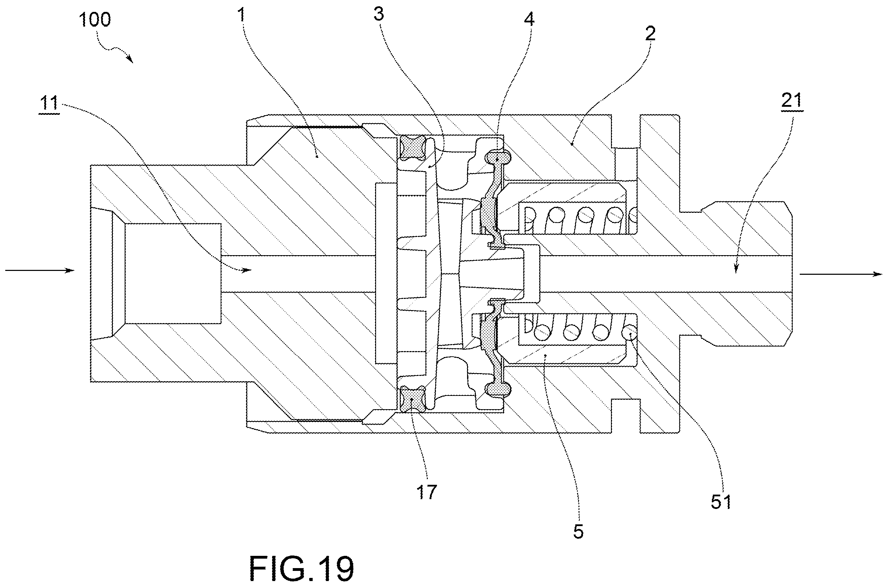

The same considerations described above are equally applicable to the solution in Fig. 18 and 19, in which the intermediate body 3 is used with reverse fluid F direction with respect to Fig. 6 and 7.

Preferably, the intermediate body 3 is made by injection molding (e.g., of thermoplastic material). Such choice allows a wide margin of freedom on the geometry of the intermediate body 3, a geometry that, if properly designed, allows for a reduction in the pressure drops of the valve 100.

The intermediate body 3 comprises at least one radial channel 303 that connects the central channel 301 with the outer circular crown 302.

With reference to Fig. 1, a first technical solution to reduce the pressure drops of the valve 100 provides for making the at least one radial channel 303 with a divergent geometry. The radial channel 303 is substantially straight. The radial channel 303 is provided with an inlet 304 and an outlet 305. Preferably, therefore, the radial channel 303 enlarges from the inside to the outside, i.e., the inlet 304 is narrower with respect to the outlet 305.

In an embodiment example, the radial channel 303 is provided with an inlet 304 with the same amplitude as the outlet 305.

The radial channel 303 enlarges from the inside to the outside in terms of width (in the plane) and/or height (vertically) .

In the example in Fig. 5 and 7, the radial channel 303 enlarges from the inside to the outside in terms of width (in the plane).

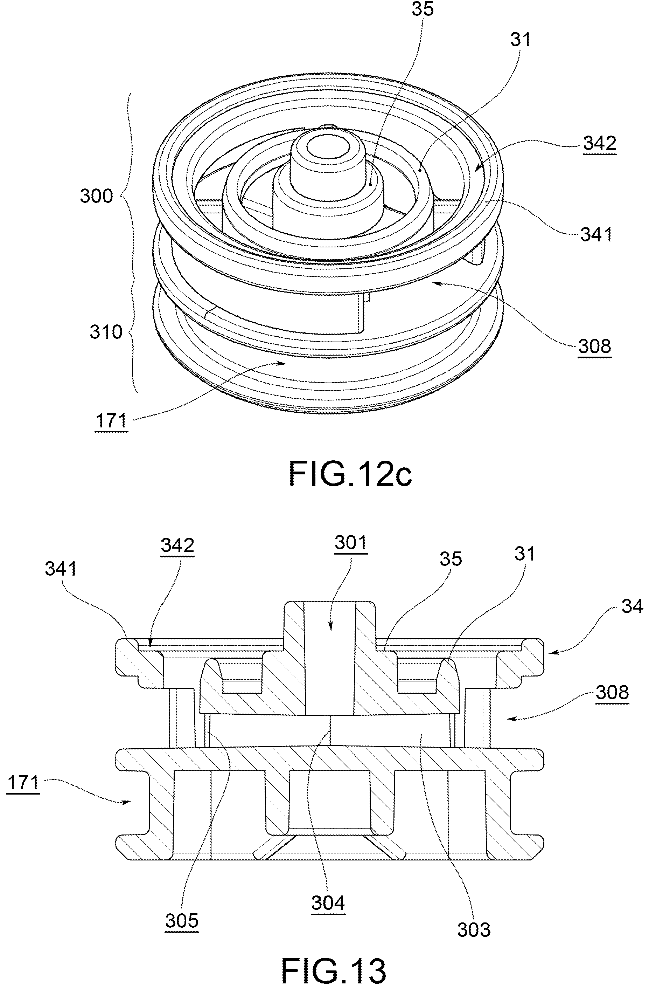

In the example in Fig. 13, the radial channel 303 enlarges from the inside to the outside in terms of height (vertically) .

The same considerations described above are equally applicable to the solution in Fig. 18 and 19, in which the intermediate body 3 is used with reverse fluid F direction with respect to Fig. 6 and 7. In such case, the at least one radial channel 303 has a convergent geometry relative to the flow direction, i.e., the inlet is wider than the outlet, as seen in Fig. 19.

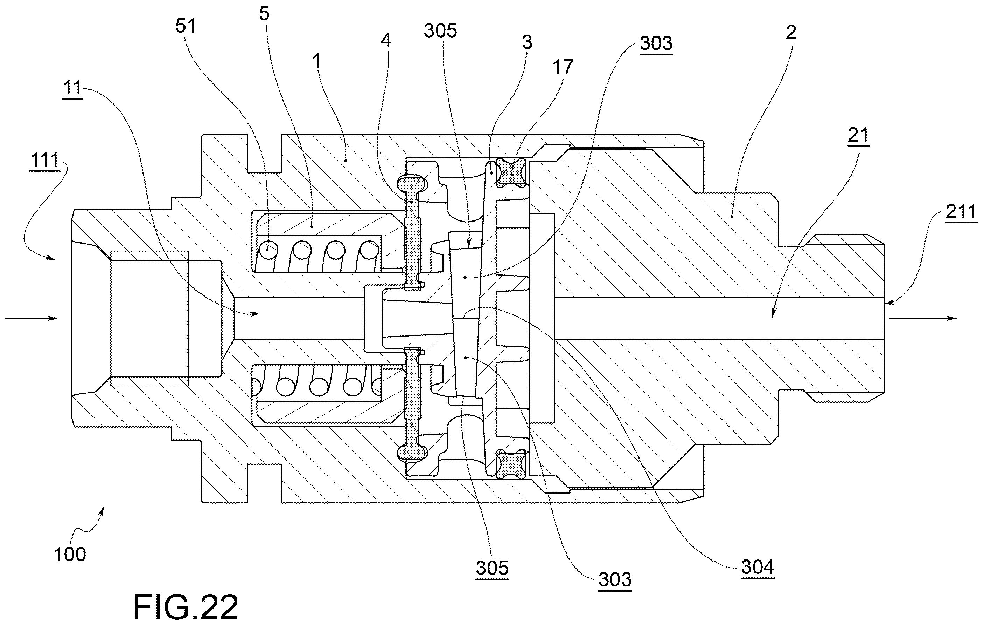

In the example shown in Fig. 22, regardless of the flow direction, with reference to Fig. 1, the intermediate body 3 has both a radial channel with divergent geometry and a radial channel with convergent geometry. In fact, in such solution there is both a radial channel 303 with the inlet 304 narrower than the outlet 305 and a radial channel with the inlet 304 wider than the outlet 305.

The presence of at least one divergent or convergent radial channel allows to vary the flow velocity.

In an embodiment example, the intermediate body 3 comprises a plurality of radial channels 303 that connect the central channel 301 with the outer circular crown 302. In such example, the radial channels 303 share the same inlet 304.

For example, as in Fig. 7, 3A, 3B, 3C, 4-7 and 12C, the intermediate body 3 comprises two radial channels 303 that connect the central channel 301 with the outer circular crown 302. In such example, the radial channels 303 share the same inlet 304 and are provided with opposing outlets 305.

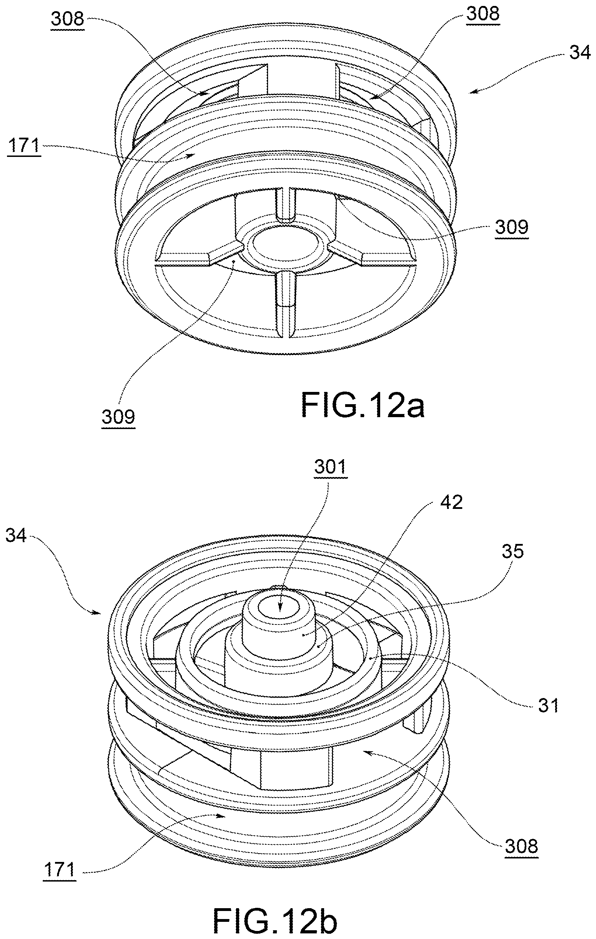

For example, as in Fig. 12A and 12B, the intermediate body 3 comprises four radial channels 303, evenly distributed along the circumference, connecting the central channel 301 with the outer circular crown 302. In such example, the radial channels 303 share the same inlet 304 and are provided with outlets 305, opposed in twos.

The intermediate body 3 comprises, at the outer wall 307 of the loading portion 300, at least one side opening 308, preferably aligned with the outlet 305 of a radial channel 303. Preferably, the side opening 308 is rectangular.

In an embodiment example, the intermediate body 3 comprises a plurality of side openings 308.

A second technical solution to reduce the pressure drops of the valve 100 provides for making the at least one enlarged side opening 308. Preferably, therefore, the width of the side opening 308 is greater than the width of the outlet 305. Such solution allows to facilitate the direction change of the flow (from horizontal to vertical).

The intermediate body 3 comprises at least one axial channel 309 connecting the inner circular crown 311 to the outlet duct 21.

A further technical solution to reduce the pressure drops of the valve 100 provides for making the at least one axial channel 309 with a divergent geometry. The axial channel 309 is substantially straight. The axial channel 309 is provided with an inlet 309' and an outlet 309". Preferably, therefore, the axial channel 309 enlarges from top to bottom, i.e., the inlet 309' is narrower than the outlet 309". Such solution allows to reduce the flow velocity.

In an embodiment example, the intermediate body 3 comprises a plurality of axial channels 309. For example, the intermediate body 3 comprises two axial channels 309.

Advantageously, all the functions required of the valve 100 have been concentrated on the intermediate body 3. By virtue of the above technical solutions, it is possible to:
- easily adjust the flow by controlling the cross-section of the at least one radial channel 303;
- maximize the flow rate;
- set the opening and closing pressures of the valve by acting on the thrust areas of the membrane 4.

The first body 1, the second body 2, and the intermediate body 3 may be made of plastics material or metal.

Innovatively, a valve for maintaining the residual pressure according to the present invention provides an optimal flow rate even at different inlet pressures of the fluid.

Advantageously, in a valve for maintaining residual pressure according to the present invention, pressure drops are significantly reduced.

Advantageously, in a valve for maintaining the residual pressure according to the present invention all the required functions are concentrated on the intermediate body. This allows the flow rate to be set according to various needs by acting only on the intermediate body. Furthermore, the pressure on the outlet side is maintained even if the delivery pressure drops.

Advantageously, moreover, in the solutions in which the intermediate body is arranged upstream of the membrane, the noise encountered during valve flushing is greatly reduced.

A person skilled in the art, in order to satisfy contingent and specific needs, may make numerous modifications and variations to the valve described above, said modifications and variations all being contained within the scope of the invention as defined in the following claims.

## Claims

1. A valve (100) for maintaining the residual pressure in an air suspension of a vehicle, comprising:
- a first body (1) provided with an inlet duct (11) for a fluid (F);
- a second body (2), provided with an outlet duct (21) for the fluid (F) and connected to the first body (1);
- a piston (5) pushed by a spring (51) and housed in either the first body (1) or the second body (2);
- an intermediate body (3) provided with a sealing collar (31) and completely enclosed between the first body (1) and the second body (2);
- a flexible membrane (4), pushed by the piston (5) against the sealing collar (31) to a closed position of the passage for the fluid (F) between the inlet duct (11) and the outlet duct (21),
wherein said first body (1), said second body (2) and said intermediate body (3) are separate and distinct elements assembled to form the valve (100);
**characterized in that** the membrane (4) is held between the first body (1) and the intermediate body (3), or between the intermediate body (3) and the second body (2) in:
- a peripheral gripping zone (91) made between a peripheral shoulder (14) of the first body (1) or of the second body (2) and a peripheral portion (34) of the intermediate body (3) ;
- a central gripping zone (92) made between a central shoulder (15) of the first body (1) or of the second body (2) and a central portion (35) of the intermediate body (3).

2. Valve (100) according to claim 1, wherein the first body (1) comprises a piston housing (121) arranged about the inlet duct (11) and wherein the piston (5) and the spring (51) are housed.

3. Valve (100) according to claim 1, wherein the second body (2) comprises a piston housing (121) arranged about the outlet duct (21) and wherein the piston (5) and spring (51) are housed.

4. Valve (100) according to claim 1 or 2, wherein the intermediate body (3) is housed in an intermediate housing (122), arranged downstream of a piston housing (121), said intermediate housing (122) being made inside the first body (1) or inside the second body (2).

5. Valve (100) according to claim 1 or 3, wherein the intermediate body (3) is housed in an intermediate housing (122), arranged upstream of a piston housing (121), said intermediate housing (122) being made inside the second body (2).

6. Valve (100) according to any of the preceding claims, wherein said peripheral portion (34) of the intermediate body (3) comprises an annular seat (342) and the membrane (4) remains pinched between the peripheral shoulder (14) of the first body (1) and a bottom of said annular seat (342).

7. Valve (100) according to any one of the preceding claims when dependent on claim 4, wherein the intermediate body (3) comprises:
- a loading portion (300) provided with a central channel (301) fluidically connected upstream to the inlet duct (11) and downstream to an outer circular crown (302) by means of at least one radial channel (303);
- an unloading portion (310) provided with an inner circular crown (311) connected downstream to the outlet duct (21) by means of at least one axial channel (309);
- wherein the loading portion (300) is fluidically separated from the unloading portion (310) by means of the membrane (4).

8. Valve (100) according to any one of the preceding claims when dependent on claim 5, wherein the intermediate body (3) comprises:
- a loading portion provided with an inner circular crown (311) connected upstream to the inlet duct (11) by at least one axial channel (309);
- an unloading portion provided with a central channel (301) fluidically connected downstream to the outlet duct (21) and upstream to an outer circular crown (302) by at least one radial channel (303);
- wherein the loading portion is fluidically separated from the unloading portion by the membrane (4).

9. Valve (100) according to claim 7 or 8, wherein the at least one radial channel (303) is provided with an inlet (304) and an outlet (305), and wherein the inlet (304) is narrower than the outlet (305) or wherein the inlet (304) is wider than the outlet (305).

10. Valve (100) according to claim 9, wherein the intermediate body (3) comprises a plurality of radial channels (303) which share the same inlet (304).

11. Valve (100) according to any one of claims 7 to 10, wherein the intermediate body (3) comprises at least one side opening (308), either aligned or not aligned with an outlet (305) of a radial channel (303), wherein the width of the side opening (308) is greater than the width of the outlet (305) of the radial channel (303).

12. Valve (100) according to any one of claims 7 to 11, wherein the at least one axial channel (309) is provided with an inlet (309') and an outlet (309''), and wherein the inlet (309') is narrower than the outlet (309").

13. Valve (100) according to any one of the preceding claims, wherein a portion of the membrane (4) pinched between the intermediate body (3) and the piston (5) has a greater thickness than a portion adjacent to said pinched portion.

14. Valve (100) according to any one of the preceding claims, wherein the membrane (4) is provided:
- at an outer edge (41), of a lip (491) protruding on at least one side; and/or
- centrally, of a membrane cylinder (490) defining a central hole (411).

## Patentansprüche

1. Ventil (100) zur Aufrechterhaltung des Restdrucks in einer Luftfederung eines Fahrzeugs, umfassend:
- einen ersten Körper (1), der mit einem Einlasskanal (11) für ein Fluid (F) versehen ist;
- einen zweiten Körper (2), der mit einem Auslasskanal (21) für das Fluid (F) versehen und mit dem ersten Körper (1) verbunden ist;
- einen Kolben (5), der durch eine Feder (51) gedrückt wird und entweder im ersten Körper (1) oder im zweiten Körper (2) untergebracht ist;
- einen Zwischenkörper (3), der mit einem Dichtungskragen (31) versehen und vollständig zwischen dem ersten Körper (1) und dem zweiten Körper (2) eingeschlossen ist;
- eine flexible Membran (4), die durch den Kolben (5) gegen den Dichtungskragen (31) in eine geschlossene Position des Durchlasses für das Fluid (F) zwischen dem Einlasskanal (11) und dem Auslasskanal (21) gedrückt wird,
wobei der erste Körper (1), der zweite Körper (2) und der Zwischenkörper (3) separate und unterschiedliche Elemente sind, die zusammengefügt sind, um das Ventil (100) zu bilden;
**dadurch gekennzeichnet, dass** die Membran (4) zwischen dem ersten Körper (1) und dem Zwischenkörper (3) oder zwischen dem Zwischenkörper (3) und dem zweiten Körper (2) gehalten wird in:
- einer peripheren Greifzone (91), die zwischen einer peripheren Schulter (14) des ersten Körpers (1) oder des zweiten Körpers (2) und einem peripheren Abschnitt (34) des Zwischenkörpers (3) ausgebildet ist;
- einer zentralen Greifzone (92), die zwischen einer zentralen Schulter (15) des ersten Körpers (1) oder des zweiten Körpers (2) und einem zentralen Abschnitt (35) des Zwischenkörpers (3) ausgebildet ist.

2. Ventil (100) nach Anspruch 1, wobei der erste Körper (1) ein Kolbengehäuse (121) umfasst, das um den Einlasskanal (11) herum angeordnet ist und in dem der Kolben (5) und die Feder (51) untergebracht sind.

3. Ventil (100) nach Anspruch 1, wobei der zweite Körper (2) ein Kolbengehäuse (121) umfasst, das um den Auslasskanal (21) herum angeordnet ist und in dem der Kolben (5) und die Feder (51) untergebracht sind.

4. Ventil (100) nach Anspruch 1 oder 2, wobei der Zwischenkörper (3) in einem Zwischengehäuse (122) untergebracht ist, das stromabwärts eines Kolbengehäuses (121) angeordnet ist, wobei das Zwischengehäuse (122) im Inneren des ersten Körpers (1) oder im Inneren des zweiten Körpers (2) ausgebildet ist.

5. Ventil (100) nach Anspruch 1 oder 3, wobei der Zwischenkörper (3) in einem Zwischengehäuse (122) untergebracht ist, das stromaufwärts eines Kolbengehäuses (121) angeordnet ist, wobei das Zwischengehäuse (122) im Inneren des zweiten Körpers (2) ausgebildet ist.

6. Ventil (100) nach einem der vorhergehenden Ansprüche, wobei der periphere Abschnitt (34) des Zwischenkörpers (3) einen Ringsitz (342) umfasst und die Membran (4) zwischen der peripheren Schulter (14) des ersten Körpers (1) und einem Boden des Ringsitzes (342) eingeklemmt bleibt.

7. Ventil (100) nach einem der vorhergehenden Ansprüche bei Abhängigkeit von Anspruch 4, wobei der Zwischenkörper (3) umfasst:
- einen Ladeabschnitt (300), der mit einem zentralen Kanal (301) versehen ist, der stromaufwärts mit dem Einlasskanal (11) und stromabwärts mittels mindestens eines Radialkanals (303) mit einem äußeren Kreiskranz (302) strömungstechnisch verbunden ist;
- einen Entladeabschnitt (310), der mit einem inneren Kreiskranz (311) versehen ist, der stromabwärts mittels mindestens eines Axialkanals (309) mit dem Auslasskanal (21) verbunden ist;
- wobei der Ladeabschnitt (300) vom Entladeabschnitt (310) mittels der Membran (4) strömungstechnisch getrennt ist.

8. Ventil (100) nach einem der vorhergehenden Ansprüche bei Abhängigkeit von Anspruch 5, wobei der Zwischenkörper (3) umfasst:
- einen Ladeabschnitt, der mit einem inneren Kreiskranz (311) versehen ist, der stromaufwärts durch mindestens einen Axialkanal (309) mit dem Einlasskanal (11) verbunden ist;
- einen Entladeabschnitt, der mit einem zentralen Kanal (301) versehen ist, der stromabwärts mit dem Auslasskanal (21) und stromaufwärts mit einem äußeren Kreiskranz (302) durch mindestens einen Radialkanal (303) strömungstechnisch verbunden ist;
- wobei der Ladeabschnitt vom Entladeabschnitt durch die Membran (4) strömungstechnisch getrennt ist.

9. Ventil (100) nach Anspruch 7 oder 8, wobei der mindestens eine Radialkanal (303) mit einem Einlass (304) und einem Auslass (305) versehen ist und wobei der Einlass (304) schmaler als der Auslass (305) ist oder wobei der Einlass (304) breiter als der Auslass (305) ist.

10. Ventil (100) nach Anspruch 9, wobei der Zwischenkörper (3) eine Vielzahl von Radialkanälen (303) umfasst, die sich denselben Einlass (304) teilen.

11. Ventil (100) nach einem der Ansprüche 7 bis 10, wobei der Zwischenkörper (3) mindestens eine Seitenöffnung (308) umfasst, die entweder fluchtend oder nicht fluchtend mit einem Auslass (305) eines Radialkanals (303) ausgerichtet ist, wobei die Breite der Seitenöffnung (308) größer als die Breite des Auslasses (305) des Radialkanals (303) ist.

12. Ventil (100) nach einem der Ansprüche 7 bis 11, wobei der mindestens eine Axialkanal (309) mit einem Einlass (309') und einem Auslass (309") versehen ist und wobei der Einlass (309') schmaler als der Auslass (309") ist.

13. Ventil (100) nach einem der vorhergehenden Ansprüche, wobei ein Abschnitt der Membran (4), der zwischen dem Zwischenkörper (3) und dem Kolben (5) eingeklemmt ist, eine größere Dicke aufweist als ein an den eingeklemmten Abschnitt angrenzender Abschnitt.

14. Ventil (100) nach einem der vorhergehenden Ansprüche, wobei die Membran (4) versehen ist:
- an einem Außenrand (41) mit einer Lippe (491), die auf mindestens einer Seite hervorsteht; und/oder
- zentral mit einem Membranzylinder (490), der ein zentrales Loch (411) definiert.

## Revendications

1. Vanne (100) destinée à maintenir la pression résiduelle dans une suspension pneumatique de véhicule, comprenant :
- un premier corps (1) muni d'un conduit d'entrée (11) pour un fluide (F) ;
- un deuxième corps (2), muni d'un conduit de sortie (21) pour le fluide (F) et relié au premier corps (1) ;
- un piston (5) poussé par un ressort (51) et logé soit dans le premier corps (1), soit dans le deuxième corps (2) ;
- un corps intermédiaire (3) muni d'un collier d'étanchéité (31) et complètement enfermé entre le premier corps (1) et le deuxième corps (2) ;
- une membrane flexible (4), poussée par le piston (5) contre le collier d'étanchéité (31) jusqu'à fermer le passage du fluide (F) entre le conduit d'entrée (11) et le conduit de sortie (21),
dans lequel ledit premier corps (1), ledit deuxième corps (2) et ledit corps intermédiaire (3) sont des éléments séparés et distincts, assemblés pour former la vanne (100) ;
**caractérisée en ce que** la membrane (4) est maintenue entre le premier corps (1) et le corps intermédiaire (3), ou entre le corps intermédiaire (3) et le deuxième corps (2) dans :
- une zone de serrage périphérique (91) formée entre un épaulement périphérique (14) du premier corps (1) ou du deuxième corps (2) et une partie périphérique (34) du corps intermédiaire (3) ;
- une zone de serrage centrale (92) formée entre un épaulement central (15) du premier corps (1) ou du deuxième corps (2) et une partie centrale (35) du corps intermédiaire (3).

2. Vanne (100) selon la revendication 1, dans laquelle le premier corps (1) comprend un logement de piston (121) disposé autour du conduit d'entrée (11) et dans lequel le piston (5) et le ressort (51) sont logés.

3. Vanne (100) selon la revendication 1, dans laquelle le deuxième corps (2) comprend un logement de piston (121) disposé autour du conduit de sortie (21) et dans lequel le piston (5) et le ressort (51) sont logés.

4. Vanne (100) selon la revendication 1 ou 2, dans laquelle le corps intermédiaire (3) est logé dans un logement intermédiaire (122), disposé en aval d'un logement de piston (121), ledit logement intermédiaire (122) étant réalisé à l'intérieur du premier corps (1) ou à l'intérieur du deuxième corps (2).

5. Vanne (100) selon la revendication 1 ou 3, dans laquelle le corps intermédiaire (3) est logé dans un logement intermédiaire (122), disposé en amont d'un logement de piston (121), ledit logement intermédiaire (122) étant réalisé à l'intérieur du deuxième corps (2).

6. Vanne (100) selon l'une quelconque des revendications précédentes, dans laquelle ladite partie périphérique (34) du corps intermédiaire (3) comprend un siège annulaire (342) et la membrane (4) reste pincée entre l'épaulement périphérique (14) du premier corps (1) et le fond dudit siège annulaire (342).

7. Vanne (100) selon l'une quelconque des revendications précédentes lorsqu'elle dépend de la revendication 4, dans laquelle le corps intermédiaire (3) comprend :
- une partie de chargement (300) munie d'un canal central (301) relié fluidiquement en amont au conduit d'entrée (11) et en aval à une couronne circulaire extérieure (302) au moyen d'au moins un canal radial (303) ;
- une partie de déchargement (310) munie d'une couronne circulaire intérieure (311) reliée en aval au conduit de sortie (21) au moyen d'au moins un canal axial (309) ;
- dans lequel la partie de chargement (300) est séparée fluidiquement de la partie de déchargement (310) au moyen de la membrane (4).

8. Vanne (100) selon l'une quelconque des revendications précédentes lorsqu'elle dépend de la revendication 5, dans laquelle le corps intermédiaire (3) comprend :
- une partie de chargement munie d'une couronne circulaire intérieure (311) reliée en amont au conduit d'entrée (11) par au moins un canal axial (309) ;
- une partie de déchargement munie d'un canal central (301) relié fluidiquement en aval au conduit de sortie (21) et en amont à une couronne circulaire extérieure (302) par au moins un canal radial (303) ;
- dans lequel la partie de chargement est séparée fluidiquement de la partie de déchargement par la membrane (4).

9. Vanne (100) selon la revendication 7 ou 8, dans laquelle au moins un canal radial (303) est muni d'une entrée (304) et d'une sortie (305), et dans laquelle l'entrée (304) est plus étroite que la sortie (305) ou dans laquelle l'entrée (304) est plus large que la sortie (305).

10. Vanne (100) selon la revendication 9, dans laquelle le corps intermédiaire (3) comprend une pluralité de canaux radiaux (303) qui partagent la même entrée (304).

11. Vanne (100) selon l'une quelconque des revendications 7 à 10, dans laquelle le corps intermédiaire (3) comprend au moins une ouverture latérale (308), alignée ou non avec une sortie (305) d'un canal radial (303), dans laquelle la largeur de l'ouverture latérale (308) est supérieure à la largeur de la sortie (305) du canal radial (303).

12. Vanne (100) selon l'une quelconque des revendications 7 à 11, ledit au moins canal axial (309) est muni d'une entrée (309') et d'une sortie (309"), et dans laquelle l'entrée (309') est plus étroite que la sortie (309").

13. Vanne (100) selon l'une quelconque des revendications précédentes, dans laquelle une partie de la membrane (4) pincée entre le corps intermédiaire (3) et le piston (5) présente une épaisseur supérieure à celle d'une partie adjacente à ladite partie pincée.

14. Vanne (100) selon l'une quelconque des revendications précédentes,
dans laquelle la membrane (4) est dotée :
- sur un bord extérieur (41), d'un rebord (491) faisant saillie d'au moins un côté ; et/ou
- au centre, d'un cylindre à membrane (490) définissant un orifice central (411).
